Europäisches Patentamt

European Patent Office

Office européen des brevets

(19)

(11) **EP 1 283 964 B1**

(12) **FASCICULE DE BREVET EUROPEEN**

(45) Date de publication et mention
de la délivrance du brevet:
**19.07.2006 Bulletin 2006/29**

(21) Numéro de dépôt: **01938316.5**

(22) Date de dépôt: **23.05.2001**

(51) Int Cl.:
*F16K 5/12* (2006.01)          *F16K 5/10* (2006.01)

(86) Numéro de dépôt international:
**PCT/FR2001/001595**

(87) Numéro de publication internationale:
**WO 2001/090613 (29.11.2001 Gazette 2001/48)**

(54) **ROBINET AVEC UNE OUVERTURE SECONDAIRE**

HAHN MIT SEKUNDÄRER ÖFFNUNG

FAUCET WITH SECONDARY OPENING

(84) Etats contractants désignés:
**BE DE FR**

(30) Priorité: **24.05.2000 FR 0006612**

(43) Date de publication de la demande:
**19.02.2003 Bulletin 2003/08**

(73) Titulaire: **SNECMA**
**75015 Paris (FR)**

(72) Inventeurs:
• **LEMONNIER, Thierry**
**F-27620 Gasny (FR)**
• **LEGRAND, Serge**
**F-27940 Notre-Dame-de-L'Isle (FR)**

(74) Mandataire: **Desormiere, Pierre-Louis et al**
**Cabinet Beau de Loménie,**
**158, rue de l'Université**
**75340 Paris Cedex 07 (FR)**

(56) Documents cités:
**EP-A- 0 843 116          DE-A- 1 450 552**
**US-A- 2 632 467**

## Description

### Domaine de l'invention

La présente invention concerne un dispositif de vanne de type vanne à boisseau. Ce type de vanne est munie d'un boisseau qui obture le conduit d'une canalisation lorsque la vanne est en position fermée et qui comprend une ouverture destinée à coopérer avec le conduit lorsque la vanne est en position ouverte.

### Art antérieur

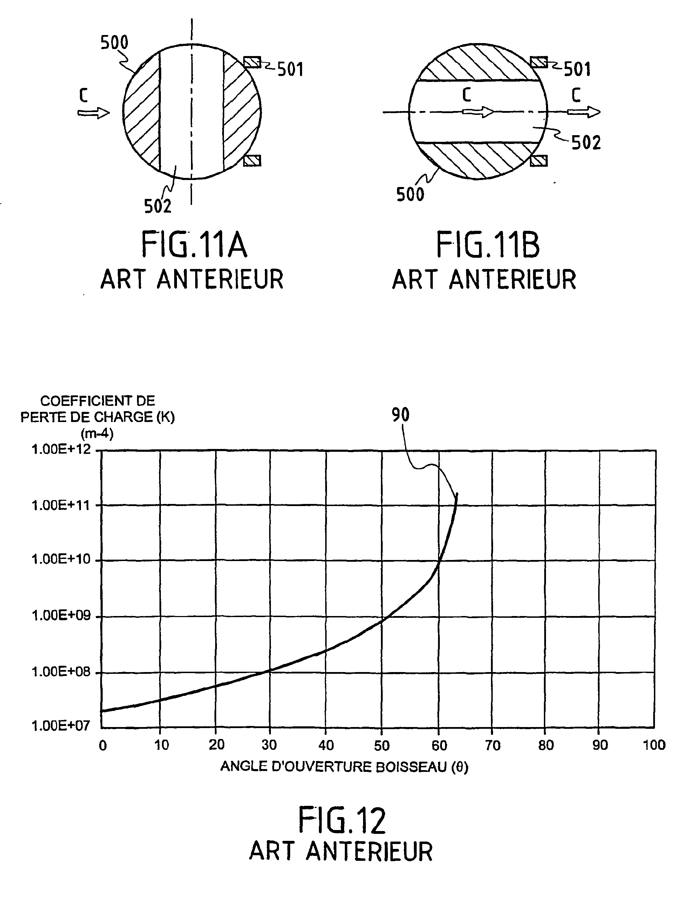

Parmi les dispositifs classiques de vanne de type boisseau, l'utilisation de la vanne à boisseau sphérique, par exemple, est largement répandue notamment en raison de sa simplicité de mise en oeuvre et de sa fiabilité. La figure 11a représente, en coupe, un dispositif de vanne à boisseau sphérique en position fermée. L'étanchéité entre un boisseau 500 et un corps de vanne (non représenté) est assurée par un joint annulaire 501 qui coopère avec ces deux éléments. Dans cette position, une ouverture d'écoulement de fluide 502 du boisseau se trouve sensiblement perpendiculaire à la direction de circulation du fluide indiquée par la flèche C, c'est-à-dire hors du passage défini par le joint 501. La figure 11b illustre ce même dispositif dans une position ouverte. Dans cette position, l'ouverture 502 se trouve alignée avec la direction de circulation de fluide dans le conduit autorisant ainsi le passage du fluide d'amont en aval dans le conduit.

La caractéristique hydraulique, c'est-à-dire le coefficient de perte de charge en fonction de l'angle d'ouverture du boisseau, pour une vanne à boisseau sphérique telle que décrite ci-dessus, est représentée sur la figure 12. D'après cette figure, l'allure de la courbe 90 de perte de charge se caractérise par une chute brutale du coefficient de perte de charge lors des premiers instants de l'ouverture. Le coefficient K de perte de charge s'exprime par la relation suivante : $K = \dfrac{\rho \Delta P}{Qm^2}$ où $\rho$ est la masse volumique du fluide, $\Delta P$ la perte de charge et Qm le débit massique.

Ainsi, avec ce type de configuration, il est difficile de contrôler précisément la perte de charge lors de l'ouverture du boisseau si bien que le débit de fluide se caractérise uniquement par deux états pratiquement sans transition: un état non-passant (charge maximum) en position fermée tant que l'ouverture du boisseau n'est pas passée au-delà du joint et un état passant (charge minimum) où le coefficient de perte de charge chute brutalement dès que l'ouverture du boisseau commence à dépasser le joint.

### Objet et description succincte de l'invention

La présente invention vise à remédier aux inconvénients précités et à réaliser un dispositif de vanne de type boisseau qui permet un contrôle de sa caractéristique hydraulique afin d'obtenir plusieurs phases d'écoulement.

Ces buts sont atteints grâce à un dispositif de vanne comprenant un corps de vanne délimitant un conduit de circulation de fluide comportant une portion amont et une portion aval entre lesquelles est disposé un boisseau comportant une ouverture d'écoulement principal, le boisseau étant mobile entre une première position dans laquelle l'ouverture d'écoulement principal coopère avec le conduit de circulation et une seconde position dans laquelle le boisseau ferme ledit conduit, caractérisé en ce que le dispositif de vanne inclut un seul joint annulaire assurant l'étanchéité entre le conduit et la paroi externe du boisseau et en ce que ledit boisseau comprend en outre au moins un moyen d'écoulement secondaire décalé par rapport à ladite ouverture d'écoulement principal de sorte que lorsque le boisseau se trouve dans une position intermédiaire entre les positions d'ouverture et de fermeture, le fluide circule dans le conduit en entrant directement par l'ouverture d'écoulement principal du côté de la portion amont du conduit et en ressortant par le moyen d'écoulement secondaire du côté de la portion aval du conduit.

Ainsi, la présente invention propose un dispositif de vanne qui permet d'adapter de façon simple et économique la caractéristique hydraulique d'une vanne de type boisseau pour obtenir plusieurs phases d'écoulement.

Le joint annulaire peut être disposé, soit entre la paroi externe du boisseau et la portion aval du conduit, soit entre la paroi externe du boisseau et la portion amont du conduit.

Plus spécifiquement, les moyens d'écoulement secondaire présentent une forme et une dimension qui sont calibrées en fonction du niveau de perte de charge désiré.

De cette façon le niveau de perte de charge de chaque phase d'écoulement peut être déterminé d'après la forme et la dimension des moyens d'écoulement secondaire.

Plus particulièrement, la valeur de l'écartement définie, selon le plan de déplacement du boisseau, entre les moyens d'écoulement secondaire et l'ouverture d'écoulement principal est fonction de la durée de la phase d'écoulement produite par les moyens d'écoulement secondaire.

Par conséquent, lors du déplacement du boisseau entre une position fermée et ouverte ou inversement, la longueur de la phase d'écoulement produite par les moyens d'écoulement secondaire peut être contrôlée par la valeur de l'écartement entre ceux-ci et l'ouverture principale.

Selon un mode de réalisation de l'invention, les moyens d'écoulement secondaire comprennent une ouverture disposée entre la surface externe du boisseau et la cavité définie par l'ouverture d'écoulement principal.

Selon un autre mode de réalisation de l'invention, les moyens d'écoulement secondaire comprennent une première et une seconde ouvertures disposées entre la surface externe du boisseau et la cavité définie par l'ouverture principale, les première et seconde ouvertures étant sensiblement alignées suivant un axe défini par le diamètre du boisseau.

Selon encore un autre mode de réalisation de l'invention, les moyens d'écoulement secondaire comprennent au moins une ouverture décalée d'une longueur parallèlement à l'ouverture principale du boisseau.

Toujours selon un autre mode de réalisation de l'invention, les moyens d'écoulement secondaire comprennent plusieurs ouvertures disposées entre la surface externe du boisseau et la cavité définie par l'ouverture principale.

Suivant un aspect de la présente invention, les moyens d'écoulement secondaire sont disposés suivant un plan incliné par rapport au plan défini par l'ouverture principale.

Selon un aspect de l'invention, le dispositif de vanne comprend des moyens d'étanchéité disposés entre la surface externe du boisseau et le conduit.

Selon un aspect particulier de l'invention, le boisseau est de forme sphérique, cylindrique ou conique.

Suivant une caractéristique de l'invention, le dispositif de vanne comprend des moyens d'entraînement en rotation du boisseau pour déplacer le boisseau entre une position d'ouverture et une position de fermeture.

Plus particulièrement, les moyens d'entraînement en rotation du boisseau entraînent ledit boisseau suivant un sens giratoire permanent.

Suivant une autre caractéristique de l'invention, le boisseau se déplace entre une position d'ouverture et une position de fermeture par translation linéaire.

Le dispositif de vanne tel que ci-dessus défini peut être appliqué à un conduit de circulation de liquide.

## Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :

- la figure 1 est une vue schématique en coupe transversale d'un dispositif de vanne conformément à un premier mode de réalisation selon l'invention,
- la figure 2 est une vue schématique en coupe selon le plan II-II de la figure 1 montrant un boisseau d'un dispositif de vanne selon un premier mode de réalisation de l'invention,
- les figures 3a, 3b et 3c sont des vues schématiques en coupe selon le plan II-II de la figure 1 montrant un boisseau dans différentes positions selon un premier mode de réalisation de l'invention,
- la figure 4 est un diagramme montrant des caractéristiques hydrauliques du dispositif de vanne selon l'invention en correspondance avec les figures 3a, 3b et 3c,
- les figures 5a, 5b, 5c et 5d sont des vues schématiques en coupe montrant un boisseau dans différentes positions selon un deuxième mode de réalisation de l'invention,
- la figure 6 est un diagramme montrant des caractéristiques hydrauliques du dispositif de vanne selon un deuxième mode de réalisation de l'invention,
- la figure 7 est une vue schématique en coupe montrant un boisseau selon un troisième mode de réalisation de l'invention,
- la figure 8 est une vue schématique d'un boisseau sphérique conformément à un quatrième mode de réalisation de l'invention,
- la figure 9 est un diagramme montrant des caractéristiques hydrauliques du dispositif de vanne selon un quatrième mode de réalisation de l'invention,
- la figure 10 est une vue schématique d'un boisseau pour dispositif de vanne de type linéaire selon un cinquième mode de réalisation de l'invention,
- les figures 11a et 11b sont des vues schématiques en coupe longitudinale d'un boisseau en position d'ouverture et de fermeture selon l'art antérieur, et
- la figure 12 est un diagramme montrant une caractéristique hydraulique d'un dispositif de vanne de type boisseau selon l'art antérieur.

## Description détaillée des modes de réalisation de l'invention

Afin de ne pas compliquer inutilement la description des modes de réalisation de la présente invention, ces derniers sont essentiellement décrits en relation avec un dispositif de vanne à boisseau sphérique. Cependant, il apparaîtra clairement que la présente invention s'applique à tout type de vanne comprenant un conduit contrôlé en ouverture/fermeture par le déplacement d'un obturateur ou boisseau.

D'autre part, le dispositif de vanne selon l'invention ne comprend qu'un seul joint annulaire pour assurer l'étanchéité entre le boisseau et le conduit de la vanne. Toujours par souci de simplification, les caractéristiques de la présente invention vont être décrites ci-après en relation avec des vannes à boisseau dans lesquelles le joint est disposé entre la portion aval du conduit et la paroi externe du boisseau. Cependant, à la lecture de la description qui suit, l'homme du métier pourra envisager sans difficulté la mise en oeuvre de l'invention avec une vanne où le joint annulaire est disposé entre la paroi externe du boisseau et la portion amont du conduit.

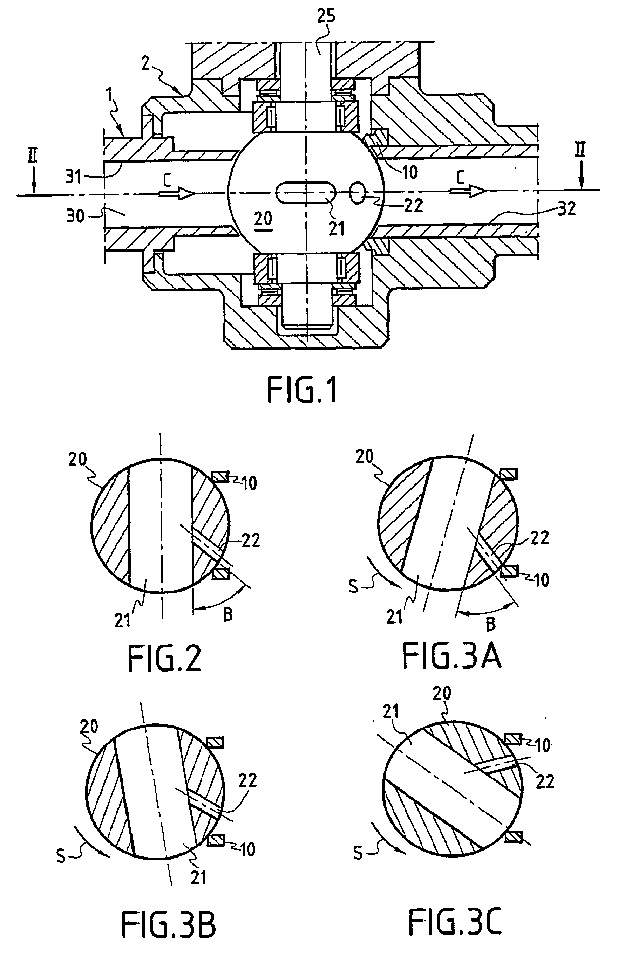

La figure 1 représente, selon un premier mode de réalisation de l'invention, une vanne 1 qui comprend un corps de vanne 2 délimitant un conduit 30 de circulation de fluide. Le conduit 30 comporte une portion amont 31 et une portion aval 32 séparées par un boisseau 20. Le boisseau 20 comprend une ouverture principale d'écoulement 21 qui est destinée à coopérer avec le conduit en position ouverte, permettant ainsi au fluide de circuler de la portion amont 31 à la portion aval 32 comme indiqué par la flèche C. En position fermée tel qu'illustré sur la figure 1, l'ouverture 21 se trouve sensiblement perpendiculaire à l'axe de circulation du fluide dans le conduit empêchant le passage du fluide de la portion amont 31 vers la portion aval 32 du conduit. Pour assurer une complète étanchéité entre les portions du conduit, un joint annulaire 10 qui est solidaire du corps de vanne 2 est maintenu en contact contre la surface externe du boisseau lorsqu'il est en position fermée. Le joint annulaire 10 défini donc une "frontière" d'étanchéité entre la portion amont et aval du conduit. Le joint 10, tel que représenté sur la figure 1, est disposé du côté de la portion aval 32 du conduit. Il peut être également placé du côté de la portion amont 31 du conduit pour former la frontière d'étanchéité avec le boisseau. Le boisseau 20 est solidaire d'un arbre rotatif 25 destiné à déplacer alternativement le boisseau d'une position d'obturation (position fermée), dans laquelle l'ouverture 21 se trouve en dehors de l'espace intérieur délimité par le joint, à une position d'alignement de l'ouverture 21 avec le conduit 30 (position ouverte) où une des extrémités de l'ouverture se trouve dans l'espace intérieur du joint. L'arbre rotatif 25 est entraîné par un actionneur (non représenté) qui peut être à commande manuelle, électrique, pneumatique ou hydraulique.

Dans le dispositif de vanne selon l'invention présenté à la figure 1, le boisseau 20 comprend également une ouverture secondaire d'écoulement 22 qui est pratiquée entre la surface extérieure de celui-ci et le canal formé par l'ouverture principale 21. La figure 2 montre une vue en coupe du boisseau 20 selon l'invention. Dans ce mode de réalisation, l'ouverture secondaire 22 forme un angle β avec l'ouverture principale 21. L'ouverture secondaire 22 est ici disposée dans le même plan horizontal que l'ouverture 21 et se trouve, selon le sens d'ouverture du boisseau, plus près de la "frontière" d'étanchéité délimitée par le joint annulaire 10 que l'ouverture principale 21. Cette ouverture secondaire peut présenter des formes et des dimensions très variées en fonction des caractéristiques hydrauliques recherchées. Toutefois, il est préférable que la dimension de cette ouverture secondaire soit nettement inférieure à celle de l'ouverture principale pour éviter des pertes de charges instantanées trop importantes.

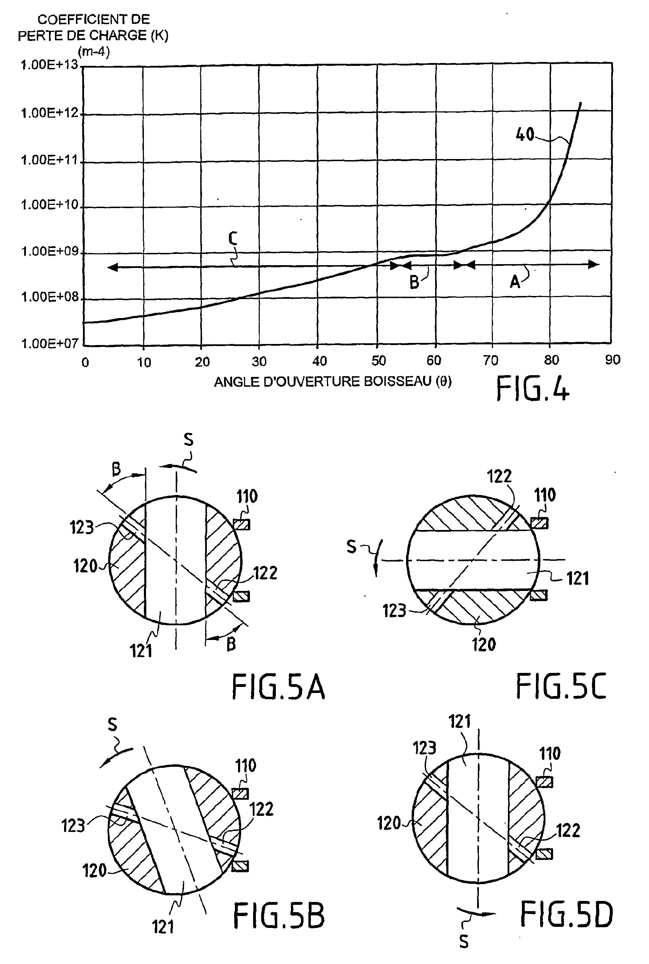

Avec le boisseau 20 comprenant une ouverture principale 21 et une ouverture secondaire 22 disposées de façon décalée comme illustré sur les figures 1 et 2, trois phases A, B et C d'écoulement du fluide sont obtenues lorsque le boisseau est en mouvement. Ces phases ainsi que le fonctionnement du dispositif selon l'invention vont être décrits en relation avec les figures 3a à 3c et avec la courbe 40 de caractéristique hydraulique représentée à la figure 4. La courbe 40 montrée en figure 4 correspond à la perte de charge constatée dans le dispositif de vanne selon le premier mode de réalisation de l'invention en fonction de l'angle θ d'ouverture du boisseau. Les valeurs prises par l'angle θ sont comprises entre 80-90° (position fermée du boisseau) et (0°) (position ouverte du boisseau). Le sens de déplacement du boisseau au cours de ces phases est indiqué par une flèche S qui montre le sens d'ouverture du boisseau et par conséquent de la vanne.

Dans une première phase A, correspondant aux premiers instants d'ouverture du boisseau, l'ouverture secondaire 22 commence à passer au delà du joint annulaire 10 comme illustré sur la figure 3a. Le fluide jusqu'ici bloqué dans la portion amont 31 du conduit 30 commence à circuler entre la portion amont 31 et aval 32 en passant par l'ouverture principale 21 du côté amont et en sortant par l'ouverture secondaire 22 située de l'autre côté du joint 10, c'est-à-dire du côté aval 32 du conduit. En référence à la figure 4, cette première phase A correspond à un début de perte charge dans le conduit qui n'est due qu'à l'ouverture secondaire 22 puisqu'à ce stade seule cette ouverture passe au delà joint.

La phase suivante est une phase B dite transitoire d'ouverture, où comme représenté sur la figure 3b l'ouverture 22 est totalement passée de l'autre côté du joint 10. Cette phase B d'écoulement correspond à un "palier" dans laquelle l'écoulement du fluide est sensiblement constant. La dimension ou plus précisément dans ce mode de réalisation le diamètre de l'ouverture 22 détermine le niveau du palier en terme de perte de charge. De plus, la longueur de ce palier est fonction de l'écartement entre l'ouverture secondaire 22 et l'ouverture principale 21 qui dans le cas d'un boisseau sphérique tel que le boisseau 20 s'exprime par l'angle β formé entre les deux ouvertures dans un plan perpendiculaire à l'axe de rotation du boisseau.

Etant donné que le dispositif de vanne selon l'invention ne comprend qu'un seul joint entre le boisseau et le conduit de circulation de fluide, une seule ouverture secondaire, décalée sur le boisseau par rapport à l'ouverture principale, permet déjà d'obtenir un contrôle du débit du fluide et par conséquent une phase d'écoulement dans laquelle la perte de charge est réduite vis-à-vis de la perte de charge produite par l'ouverture principale. En effet, comme montré à la figure 3b, le fluide qui est présent du côté amont du conduit est également présent tout autour de la paroi externe du boisseau qui n'est pas comprise dans l'espace délimité par le joint 10 du côté aval. Le fluide rentre donc du côté amont par l'ouverture principale 21 et ressort du côté aval uniquement par l'ouverture secondaire 22 régulant ainsi le débit du fluide dans la vanne dans cette phase d'ouverture. Par conséquent, selon l'invention, on peut obtenir une vanne à caractéristique hydraulique contrôlée en ne modifiant qu'un côté du boisseau.

La troisième phase correspond à la phase C où l'ouverture principale 21, comme représentée en figure 3c, qui définit un orifice plus important que celui de l'ouverture secondaire 22, passe le joint annulaire 10. L'influence de l'écoulement par l'ouverture 22 devient alors négligeable vis-à-vis de l'écoulement principal par l'ouverture 21. Dans cette phase, la caractéristique hydraulique dépend principalement de la forme de l'ouverture principale 21.

Ainsi, à la différence de la caractéristique présentée en figure 12 par un dispositif de vanne de type boisseau classique, la caractéristique hydraulique du dispositif selon l'invention est contrôlée, si bien que plusieurs phases d'écoulement sont obtenues entre le niveau de charge maximum lorsque la vanne est en position fermée et le niveau minimum de charge lorsque la vanne est ouverte.

Le palier obtenu lors de la phase B d'écoulement se retrouve également lors de la manoeuvre de fermeture du boisseau et donc de la vanne. En d'autre termes, les phases d'écoulement A, B et C obtenues lors de l'ouverture de la vanne se retrouvent inversement lors de la fermeture de celle-ci. Par conséquent, le dispositif de vanne selon l'invention est contrôlé sur le plan hydraulique aussi bien lors de l'ouverture que de la fermeture de celui-ci.

Dans le cas d'une vanne où le joint 10 est disposé de l'autre côté du boisseau, c'est-à-dire entre la portion amont 31 du conduit et la paroi externe du boisseau, l'ouverture secondaire devra être disposée de l'autre côté de l'ouverture principale symétriquement par rapport à l'axe de cette dernière de façon à obtenir les mêmes phases d'écoulement que celles qui viennent d'être décrites avec une vanne où le joint est disposé du côté aval du conduit.

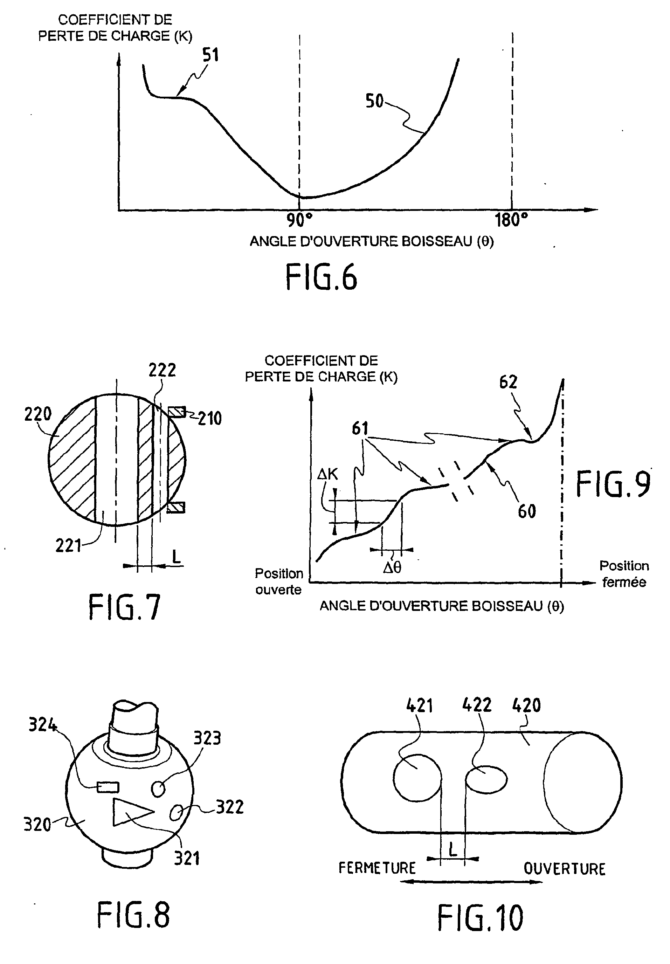

Selon un deuxième mode de réalisation de l'invention, le dispositif de vanne est équipé d'un boisseau rotatif qui tourne toujours dans le même sens grâce à un actionneur électrique par exemple. Dans ce mode de réalisation, tel que représenté sur les figures 5a à 5d, un boisseau 120 comprend une ouverture principale 121 et une première et seconde ouvertures secondaires 122, 123. Les première et seconde ouvertures secondaires 122, 123 sont sensiblement alignées sur un même axe dans le plan de l'ouverture principale 121. Ces deux ouvertures secondaires peuvent être obtenues par exemple à partir d'un seul perçage, qui traverse de part en part le boisseau, en passant par l'ouverture principale 121. Ainsi avec une telle configuration de boisseau et en tournant celui-ci toujours dans le même sens S, on peut obtenir une caractéristique hydraulique à la fermeture différente de celle obtenue à l'ouverture. En effet, en relation avec les figures 5a à 5d et avec la courbe 50 de coefficient de perte de charge en fonction de l'angle d'ouverture du boisseau 120 représentée en figure 6, on constate que dans une première phase dite d'ouverture, qui correspond à une rotation du boisseau d'un angle de 0° tel que représenté sur la figure 5a jusqu'à un angle de 90° comme illustré en figure 5c, la caractéristique hydraulique 50 présente un palier 51 du au passage de la première ouverture secondaire 122 de l'autre côté du joint 110 tel qu'illustré en figure 5b. Puis dans une seconde phase dite de fermeture, qui correspond à une rotation du boisseau de la position représentée en figure 5c (angle d'ouverture du boisseau de 90°) jusqu'à une position illustrée en figure 5d (angle d'ouverture du boisseau de 180°) qui ferme le conduit, on obtient une caractéristique hydraulique classique différente de celle obtenue pour un angle d'ouverture du boisseau allant de 0° à 90°. Par conséquent, en tournant le boisseau toujours dans le même sens S, les deux caractéristiques hydrauliques représentées en figure 6 seront alternativement obtenues.

Selon un troisième mode de réalisation de l'invention, illustré en figure 7, le dispositif de vanne comprend un boisseau 220 ayant une ouverture principale 221 et une ouverture secondaire 222 décalée d'une longueur L parallèlement à l'ouverture principale 221. La caractéristique hydraulique obtenue lors de la rotation du boisseau 220 par rapport au joint 210 est sensiblement la même que celle illustrée en figure 4.

Le dispositif selon l'invention n'est pas limité à un boisseau comprenant une ou deux ouvertures secondaires situées dans un plan équatorial du boisseau. En effet, le nombre, l'emplacement par rapport à l'ouverture principale et la forme des ouvertures secondaires sont fonction respectivement du nombre de paliers, de la longueur de chaque palier et du niveau de perte de charge désirés.

Les deux modes de réalisation déjà décrits peuvent donc être encore modifiés selon ces paramètres pour obtenir des caractéristiques hydrauliques particulières.

Selon un quatrième mode de réalisation de l'invention, la figure 8 montre un boisseau sphérique 320 qui comprend une ouverture principale 321, une première et deuxième ouvertures secondaires 322 et 323 de forme cylindrique, et une troisième ouverture secondaire 324 de forme parallélépipédique. La figure 9 illustre les diverses caractéristiques hydrauliques obtenues en termes de coefficient K de perte de charge en fonction de l'angle θ d'ouverture du boisseau. On constate que la courbe 60 de la figure 9 présente, entre une position fermée et une position ouverte, trois paliers 61 obtenus respectivement grâce aux ouvertures secondaires 322, 323 et 324. Le niveau de ces paliers dépend du diamètre ou de la surface de section présentée par chaque ouverture secondaire. La longueur des paliers 61 de la courbe 60 dépend de l'écartement, ici mesuré dans un plan perpendiculaire à l'axe de rotation, qui existe entre chaque ouverture (secondaire ou principale) et qui lors de l'ouverture ou de la fermeture du boisseau dans le conduit, détermine la longueur d'une phase d'écoulement engendrée par une ouverture. Les différents paliers obtenus peuvent également être prolongés en maintenant le boisseau dans une position intermédiaire entre une position fermée et une position ouverte de sorte que le fluide ne circule que par une ou plusieurs ouvertures secondaires. La pente $\dfrac{\Delta K}{\Delta \theta}$ peut être contrôlée en fonction de la forme, de la position sur le boisseau, et de la dimension de l'ouverture concernée. Par exemple, en ce qui concerne la forme et la dimension d'une ouverture, la courbe 60 présente une forte pente entre les deux paliers les plus proches de la position ouverte qui est due au passage au delà du joint de l'ouverture principale 321 de forme triangulaire. La forme triangulaire de l'ouverture principale 312 permet de réduire ou d'augmenter la pente de la courbe 60 suivant le sens de rotation du boisseau.

D'autre part, pour illustrer l'influence de la position d'une ouverture secondaire sur le boisseau on constate qu'un "creux" 62 apparaît sur la courbe lorsque l'angle d'ouverture est proche de la position fermée du boisseau. Un tel creux dans le comportement du coefficient de perte de charge peut être obtenu, par exemple, par le passage dans l'espace d'ouverture défini par le joint de l'ouverture 323 qui est située sur un plan non équatorial à la surface du boisseau 320.

En effet, lors de la rotation du boisseau 320, l'ouverture 323, qui est disposée de façon décalée par rapport au plan équatorial du boisseau dans lequel est situé l'ouverture principale 321, apparaît dans l'espace d'ouverture défini par le joint entraînant une diminution du coefficient de perte de charge K. L'ouverture 323 sort ensuite de l'espace d'ouverture alors que l'ouverture principale 321 n'est pas encore apparue dans l'espace d'ouverture entraînant par conséquent une augmentation du coefficient K. De telles ouvertures secondaires peuvent être ainsi disposées dans un plan non équatorial du boisseau ce qui permet d'obtenir un changement de sens de la caractéristique hydraulique tel que le "creux" 62 de la courbe 60.

Les modes de réalisation de dispositif de vanne selon l'invention qui viennent d'être décrits ne sont évidemment pas limitatifs. En fonction des applications recherchées on fera varier aussi bien le nombre d'ouverture secondaires d'écoulement que la forme des ouvertures d'écoulement qui peut être cylindrique, parallélépipédique, ovoïde, quelconque,... ou que l'emplacement des ouvertures sur le boisseau.

De plus, si pour des applications, notamment cryotechniques, la forme sphérique du boisseau est avantageuse, l'invention peut, sans aucune difficultés techniques supplémentaires, s'appliquer à des dispositifs de vanne comprenant un boisseau cylindrique, conique ou autre en fonction du besoin.

D'autre part, la présente invention peut être mise en oeuvre sur des dispositifs de vanne de type linéaire. La figure 10 montre un boisseau 420 destiné à fermer ou à ouvrir un conduit dans un dispositif de vanne de type linéaire. Le boisseau 420 se déplace alternativement, par un mouvement de translation linéaire, d'une position de fermeture où sa portion pleine obture le conduit de la vanne à une position d'ouverture dans laquelle une ouverture d'écoulement principale 421 coopère avec le conduit. Une ouverture secondaire 422, décalée d'une longueur L parallèlement à l'ouverture principale 421, permet de contrôler les caractéristiques hydrauliques du dispositif de vanne de la même façon qu'avec les dispositifs de vanne à boisseau sphérique décrits plus haut. Toutes les variantes de réalisation envisagées en ce qui concerne les caractéristiques des ouvertures secondaires (emplacement, dimension, forme, nombre...) pour les dispositifs à boisseau rotatifs sont également valables pour les dispositifs de vanne de type linéaire.

## Revendications

**1.** Dispositif de vanne (1) comprenant un corps de vanne (2) délimitant un conduit (30) de circulation de fluide, ledit conduit comportant une portion amont (31) et une portion aval (32) entre lesquelles est disposé un boisseau (20) comportant une ouverture d'écoulement principal (21), le boisseau étant mobile entre une première position dans laquelle l'ouverture d'écoulement principal (21) coopère avec le conduit de circulation et une seconde position dans laquelle le boisseau ferme ledit conduit, **caractérisé en ce que** ledit dispositif de vanne inclut un seul joint annulaire (10) assurant l'étanchéité entre le conduit et la paroi externe du boisseau et **en ce que** ledit boisseau comprend en outre au moins un moyen d'écoulement secondaire (22) décalé par rapport à ladite ouverture d'écoulement principal de sorte que lorsque ledit boisseau se trouve dans une position intermédiaire entre les positions d'ouverture et de fermeture, seul le moyen d'écoulement secondaire est présent dans l'espace interne du joint si bien que le fluide circule exclusivement par le moyen d'écoulement secondaire d'un côté de la limite d'étanchéité définie par le joint et par l'ouverture principale de l'autre côté de ladite limite.

**2.** Dispositif de vanne selon la revendication 1, **caractérisé en ce que** le joint annulaire est disposé entre la paroi externe du boisseau et la portion aval (32) du conduit (30), le moyen d'écoulement secondaire étant ménagé dans le boisseau du côté de la portion aval du conduit.

**3.** Dispositif de vanne selon la revendication 1, **caractérisé en ce que** le joint annulaire est disposé entre la paroi externe du boisseau et la portion amont (31) du conduit (30), le moyen d'écoulement secondaire étant ménagé dans le boisseau du côté de la portion amont du conduit.

**4.** Dispositif de vanne selon la revendication 1 ou 2, **caractérisé en ce que** ledit moyen d'écoulement secondaire présente une forme et une dimension qui sont calibrées en fonction du niveau de perte de charge désiré.

5. Dispositif de vanne selon l'une quelconque des revendications 1 à 4, **caractérisé en ce que** la valeur de l'écartement (β; L) définie, selon le plan de déplacement du boisseau, entre ledit moyen d'écoulement secondaire (22; 122, 123; 322, 323, 324; 422) et ladite ouverture d'écoulement principal (21; 121; 221) est fonction de la durée de la phase d'écoulement produite par le moyen d'écoulement secondaire.

6. Dispositif de vanne selon l'une quelconque des revendications 1 à 5, **caractérisé en ce que** ledit moyen d'écoulement secondaire comprend une ouverture (22) disposée entre la surface externe du boisseau et la cavité définie par l'ouverture d'écoulement principal (21).

7. Dispositif de vanne selon l'une quelconque des revendications 1 à 5, **caractérisé en ce que** ledit moyen d'écoulement secondaire comprend des première et seconde ouvertures (122, 123) disposées entre la surface externe du boisseau et la cavité définie par l'ouverture d'écoulement principal (121), lesdites première et seconde ouvertures étant sensiblement alignées suivant un axe défini par le diamètre du boisseau (120).

8. Dispositif de vanne selon l'une quelconque des revendications 1 à 5, **caractérisé en ce que** ledit moyen d'écoulement secondaire comprend plusieurs ouvertures (322, 323, 324) disposées entre la surface externe du boisseau et la cavité définie par ladite ouverture d'écoulement principal (321).

9. Dispositif de vanne selon l'une quelconque des revendications 1 à 8, **caractérisé en ce que** ledit moyen d'écoulement secondaire est disposé suivant un plan incliné par rapport au plan défini par l'ouverture d'écoulement principal.

10. Dispositif de vanne selon l'une quelconque des revendications 1 à 9, **caractérisé en ce que** ledit boisseau (20) est de forme sphérique.

11. Dispositif de vanne selon l'une quelconque des revendications 1 à 9, **caractérisé en ce que** ledit boisseau est de forme cylindrique.

12. Dispositif de vanne selon l'une quelconque des revendications 1 à 9, **caractérisé en ce que** ledit boisseau est de forme conique.

13. Dispositif de vanne selon l'une quelconque des revendications 1 à 12, **caractérisé en ce qu'**il comprend des moyens d'entraînement en rotation du boisseau (20; 120; 220; 320) pour déplacer ledit boisseau entre une position d'ouverture et une position de fermeture.

14. Dispositif de vanne selon la revendication 13, **caractérisé en ce que** lesdits moyens d'entraînement en rotation du boisseau entraînent ledit boisseau suivant un sens giratoire permanent.

15. Dispositif de vanne selon l'une quelconque des revendications 1 à 14, **caractérisé en ce qu'**il est appliqué à un conduit de circulation de liquide.

**Claims**

1. A valve device (1) comprising a valve body (2) defining a fluid flow duct (30), said duct having an upstream portion (31) and a downstream portion (32) between which there is disposed a plug (20) having a main flow opening (21), the plug being movable between a first position in which the main flow opening (21) co-operates with the flow duct, and a second position in which the plug closes said duct, **characterised in that** said valve device has a single annular gasket (10) providing sealing between the duct and the outside wall of the plug, and **in that** said plug further includes at least one secondary flow means (22) offset relative to said main flow opening so that when said plug is in an intermediate position between the open and closed positions, only the secondary flow means is present in the inside space of the gasket such that the fluid flows exclusively through the secondary flow means on one side of the sealing limit defined by the gasket and through the main opening on the other side of said limit.

2. A valve device according to claim 1, **characterised in that** the annular gasket is disposed between the outside wall of the plug and the downstream portion (32) of the duct (30), the secondary flow means being provided in the plug beside the downstream portion of the duct.

3. A valve device according to claim 1, **characterised in that** the annular gasket is disposed between the outside wall of the plug and the upstream portion (31) of the duct (30), the secondary flow means being provided in the plug beside the upstream portion of the duct.

4. A valve device according to claim 1 or claim 2, **characterised in that** said secondary flow means presents shape and size which are calibrated as a function of the desired level of head loss.

5. A valve device according to any one of claims 1 to 4, **characterised in that** the value of the spacing (β; L) between said secondary flow means (22; 122, 123; 322, 323, 324; 422) and said main flow opening (21; 121; 221) in the travel plane of the plug is a function of the duration of the flow stage produced via the secondary flow means.

**6.** A valve device according to any one of claims 1 to 5, **characterised in that** said secondary flow means comprises an opening (22) disposed between the outside surface of the plug and the cavity defined by the main flow opening (21).

**7.** A valve device according to any one of claims 1 to 5, **characterised in that** said secondary flow means comprises first and second openings (122, 123) disposed between the outside surface of the plug and the cavity defined by the main flow opening (121), said first and second openings being substantially in alignment on an axis defined by the diameter of the plug (120).

**8.** A valve device according to any one of claims 1 to 5, **characterised in that** said secondary flow means comprises a plurality of openings (322, 323, 324) disposed between the outside surface of the plug and the cavity defined by said main flow opening (321).

**9.** A valve device according to any one of claims 1 to 8, **characterised in that** said secondary flow means is disposed in a plane that is inclined relative to the plane defined by the main flow opening.

**10.** A valve device according to any one of claims 1 to 9, **characterised in that** said plug (20) is spherical in shape.

**11.** A valve device according to any one of claims 1 to 9, **characterised in that** said plug is cylindrical in shape.

**12.** A valve device according to any one of claims 1 to 9, **characterised in that** said plug is conical in shape.

**13.** A valve device according to any one of claims 1 to 12, **characterised in that** it includes drive means for turning the plug (20; 120; 220; 320) to move said plug between an open position and a closed position.

**14.** A valve device according to claim 13, **characterised in that** said plug drive means turn said plug to rotate continuously in the same direction.

**15.** A valve device according to any one of claims 1 to 14, **characterised in that** it is applied to a liquid flow duct.

**Patentansprüche**

**1.** Schiebervorrichtung (1) umfassend einen Schieberkörper (2), welche eine Leitung (30) zur Zirkulation von Flüssigkeiten begrenzt, wobei die Leitung einen stromaufwärts gelegenen (31) und einen stromabwärts gelegenen Teil (32) aufweist, zwischen denen ein Hahn (20) angeordnet ist, welcher eine Hauptdurchflußöffnung (21) aufweist, wobei der Hahn zwischen einer ersten Position, in der die Hauptdurchflußöffnung (21) mit der Zirkulationsleitung zusammenwirkt, und einer zweiten Position beweglich ist, in welcher der Hahn die Leitung schließt, **dadurch gekennzeichnet, daß** die Schiebervorrichtung eine einzige Ringdichtung (10) aufweist, welche die Abdichtung zwischen der Leitung und der Außenwand des Hahns gewährleistet, und daß der Hahn ferner mindestens ein sekundäres Durchflußmittel (22) aufweist, das in Bezug auf die Hauptabflußöffnung derart versetzt angeordnet ist, daß, wenn der Hahn sich in einer Zwischenposition zwischen der geöffneten und der geschlossenen Position befindet, sich lediglich das sekundäre Durchflußmittel im Raum innerhalb der Dichtung befindet, so daß die Flüssigkeit ausschließlich durch das sekundäre Durchflußmittel an einer Seite der durch die Dichtung definierten Dichtungsgrenze und durch die Hauptöffnung an der anderen Seite der Grenze fließt.

**2.** Schiebervorrichtung nach Anspruch 1, **dadurch gekennzeichnet, daß** die Ringdichtung zwischen der Außenwand des Hahns und dem stromabwärts gelegenen Teil (32) der Leitung (30) angeordnet ist, wobei das sekundäre Durchflußmittel an der Seite des stromabwärts gelegenen Teils der Leitung in den Hahn eingelassen ist.

**3.** Schiebervorrichtung nach Anspruch 1, **dadurch gekennzeichnet, daß** die Ringdichtung zwischen der Außenwand des Hahns und dem stromaufwärts gelegenen Teil (31) der Leitung (30) angeordnet ist, wobei das sekundäre Durchflußmittel an der Seite des stromaufwärts gelegenen Teils der Leitung in den Hahn eingelassen ist.

**4.** Schiebervorrichtung nach Anspruch 1 oder 2, **dadurch gekennzeichnet, daß** das sekundäre Durchflußmittel eine Form und Größe aufweist, die in Abhängigkeit vom gewünschten Druckverlust eingestellt werden.

**5.** Schiebervorrichtung nach einem der Ansprüche 1 bis 4, **dadurch gekennzeichnet, daß** der Wert des Abstands (β; L) zwischen dem sekundären Durchflußmittel (22; 122, 123; 322, 323, 324; 422) und der Hauptdurchflußöffnung (21; 121; 221) auf der Ebene der Hahnbewegung von der Dauer der durch das sekundäre Durchflußmittel bewirkten Durchflußphase abhängt.

6. Schiebervorrichtung nach einem der Ansprüche 1 bis 5, **dadurch gekennzeichnet, daß** das sekundäre Durchflußmittel eine Öffnung (22) aufweist, die zwischen der Außenfläche des Hahns und der durch die Hauptdurchflußöffnung (21) definierten Vertiefung angeordnet ist.

7. Schiebervorrichtung nach einem der Ansprüche 1 bis 5, **dadurch gekennzeichnet, daß** das sekundäre Durchflußmittel eine erste und eine zweite Öffnung (122,123) aufweist, die zwischen der Außenfläche des Hahns und der durch die Hauptdurchflußöffnung (121) definierten Vertiefung angeordnet sind, wobei die erste und die zweite Öffnung weitestgehend an einer durch den Durchmesser des Hahns (120) definierten Achse ausgerichtet sind.

8. Schiebervorrichtung nach einem der Ansprüche 1 bis 5, **dadurch gekennzeichnet, daß** das sekundäre Durchflußmittel mehrere Öffnungen (322, 323, 324) aufweist, die zwischen der Außenfläche des Hahns und der durch die Hauptdurchflußöffnung (321) definierten Vertiefung angeordnet sind.

9. Schiebervorrichtung nach einem der Ansprüche 1 bis 8, **dadurch gekennzeichnet, daß** das sekundäre Durchflußmittel in einer geneigten Ebene im Verhältnis zu der durch die Hauptdurchflußöffnung definierten Ebene angeordnet ist.

10. Schiebervorrichtung nach einem der Ansprüche 1 bis 9, **dadurch gekennzeichnet, daß** der Hahn (20) kugelförmig ausgebildet ist.

11. Schiebervorrichtung nach einem der Ansprüche 1 bis 9, **dadurch gekennzeichnet, daß** der Hahn zylinderförmig ausgebildet ist.

12. Schiebervorrichtung nach einem der Ansprüche 1 bis 9, **dadurch gekennzeichnet, daß** der Hahn kegelförmig ausgebildet ist.

13. Schiebervorrichtung nach einem der Ansprüche 1 bis 12, **dadurch gekennzeichnet, daß** sie Mittel zum Drehen des Hahns (20, 120, 220, 320) aufweist, um den Hahn zwischen einer geöffneten Position und einer geschlossenen Position zu bewegen.

14. Schiebervorrichtung nach Anspruch 13, **dadurch gekennzeichnet, daß** die Mittel zum Drehen des Hahns den Hahn in einer beständigen Drehrichtung bewegen.

15. Schiebervorrichtung nach einem der Ansprüche 1 bis 14, **dadurch gekennzeichnet, daß** sie für eine Leitung zur Zirkulation von Flüssigkeiten angewendet wird.

FIG.1

FIG.2

FIG.3A

FIG.3B

FIG.3C

COEFFICIENT DE
PERTE DE CHARGE (K)
(m-4)

ANGLE D'OUVERTURE BOISSEAU (θ)

FIG.4

FIG.5A

FIG.5C

FIG.5B

FIG.5D

COEFFICIENT DE
PERTE DE CHARGE (K)

51

50

90°          180°

ANGLE D'OUVERTURE BOISSEAU (θ)

## FIG.6

222

220

210

221

L

## FIG.7

COEFFICIENT DE
PERTE DE CHARGE (K)

62

61

60

$\Delta K$

$\Delta \theta$

Position
ouverte

Position
fermée

ANGLE D'OUVERTURE BOISSEAU (θ)

## FIG.9

324

323

320

322

321

## FIG.8

421    422    420

L

FERMETURE          OUVERTURE

## FIG.10

500

C

501

502

# FIG.11A
## ART ANTERIEUR

500

C C

501

502

# FIG.11B
## ART ANTERIEUR

COEFFICIENT DE
PERTE DE CHARGE (K)
(m-4)

90

1.00E+12

1.00E+11

1.00E+10

1.00E+09

1.00E+08

1.00E+07

0    10   20   30   40   50   60   70   80   90   100

ANGLE D'OUVERTURE BOISSEAU (θ)

# FIG.12
## ART ANTERIEUR